# EUROPEAN PATENT SPECIFICATION

(11) **EP 4 146 560 B1**
(45) Date of publication and mention of the grant of the patent: **18.12.2024**
(21) Application number: 21722877.4
(22) Date of filing: 03.05.2021
(51) Int. Cl.: B65D 81/38, A47J 41/00, B65D 47/24

(54) **DRINKING BOTTLE CLOSURE WITH A ROTATABLE CLOSURE CAP FOR AN INSULATED BOTTLE OR FOR AN INSULATED MUG**
TRINKFLASCHENVERSCHLUSS MIT DREHBARER VERSCHLUSSKAPPE FÜR EINE ISOLIERFLASCHE ODER FÜR EINEN ISOLIERBECHER
FERMETURE DE BOUTEILLE POUR BOIRE DOTÉE D'UN BOUCHON DE FERMETURE ROTATIF POUR UNE BOUTEILLE ISOTHERME OU POUR UNE TASSE ISOTHERME

(30) Priority: 04.05.2020 DE 102020111943; 04.05.2020 FR 2004378
(43) Date of publication of application: 15.03.2023
(73) Proprietor: Emsa GmbH, 48282 Emsdetten (DE)
(72) Inventor: HORSTMANN, Klaus, 48485 Neuenkirchen (DE)
(74) Representative: SEB Développement
(86) International application number: PCT/EP2021/061512
(87) International publication number: WO 2021/224156

(56) References cited:
- EP-A2- 2 359 722
- CN-U- 202 919 352
- JP-A- 2004 315 009
- US-A- 2 735 566
- US-A- 5 944 235

## Description

The invention relates to a drinking bottle closure with a rotatable closure cap for an insulated bottle or for an insulated mug, having the features of the preamble of claim 1.

Such an easy-to-use drinking bottle closure is known from CN 202919352 U. By mounting the closure cap in the center, it is possible to construct the closure and an associated bottle or cup with a small diameter. The drawback is that the sealing effect may be cancelled when the pressure inside the vessel increases. In this case, the cover can be lifted off the sealing ring. In addition, there is a risk that the cover will inadvertently be turned off by the user if it is rotated beyond the open position.

DE 20 2012 000 258 U1 also shows a generic drinking bottle closure with a rotatable closure cap for an insulated cup. Here, too, a sealing rim is pressed from above onto a contact surface when the cap is turned, so that the same disadvantages exist as mentioned above.

A further drinking bottle closure is described in US 2 735 566 A. The closure cap is screwed against the container body via a threaded spindle for sealing, whereby rapid opening and closing is not possible. The closure is not intended or suitable for drinking directly from the bottle.

EP 2 359 722 A2 discloses a drinking bottle closure in which the housing comprises a sealing element comprising at least one sealing lip which is arranged below the sealing edge of the housing and an outer edge of the rotary closure cap is arranged to make contact on a lower part of the sealing lip. As the rotatable closing cap is arranged underneath the sealing edge it might be lost in the housing accidentally. Further, it is apparent from this arrangement that the maximum axial displacement of the closure cap, as well as therefore the maximum possible angle of rotation, are limited.

Another drinking bottle closure having the sealing element arranged beneath a sealing edge of the housing is disclosed in JP 2004 315009 A. The same drawback applies here as the sealing element is arranged at the lowermost end of the closure arrangement.

Still another drinking bottle closure with a similar design concept and consequently with similar drawbacks is disclosed in US 5 944 235 A.

The object of the present invention is to prevent the cap from being unscrewed accidentally while still having an improved sealing effect when internal pressure inside the bottle which is covered by the closure rises.

This object is solved by a drinking bottle closure with a rotatable closure cap with the features of claim 1.

Since the outer edge of the cap is positioned on the housing below the sealing ring any internal pressure arising inside a bottle which is connected to the drinking bottle cap presses the cap more strongly against the sealing and increases the sealing effect. Due to the fact that the closure cap is arranged below the sealing outer edge, but above a support element for the bearing of the sealing cap in the housing, the sealing cap cannot be lost accidentally. In addition, this arrangement results in that the maximum axial stroke of the sealing cap and, as a consequence, the maximum possible angle of rotation, are limited.

The drinking bottle closure according to the invention has a good sealing effect, is easy to handle and, moreover, is also simple in design. Since, with the exception of the two elements for forming the movement thread, there are no movable parts that can be displaced relative to one another. A movement thread is a thread having such a high pitch that a nut placed on this thread can easily move along the axis of the thread.

Very little installation space is required in the center of the drinking bottle closure. The diameter of the drinking bottle closure can thus be kept very small, so that the drinking bottle closure is also suitable for small beverage bottles with a small volume or for closable drinking mugs.

With a correspondingly small diameter of the pouring area and a suitable design of the thread causing the vertical movement of the cap, it is even possible to hold the drinking bottle cap in one hand and to move the knob of the cap at the same time from the open to the closed position by using other fingers of the same hand, at least to such an extent that the pouring slot is closed and protected against a surge of liquid when the bottle or mug provided with the closure of the invention is moved.

For the transfer of the closure cap into a closed position secured for the transport of the bottle or mug, it is particularly intended to override an additional pressure point when turning the closure cap. Thereby the screw connection is prevented from being inadvertently loosened and thus an unintentional opening of the closure cap is avoided.

Since right-hand threads are common in most countries, most users are used to tightening a screw connection or achieving a closed state of a screw cap with a right-hand movement, i.e., by turning clockwise. Conversely, they are used to opening a closure or releasing a screw connection by turning in the opposite direction, i.e., counterclockwise. This is the case, for example, with all common drinking bottle closures of disposable beverage bottles.

To improve the sealing effect and to provide a closure with a captive closure cap, it is intended to press the closure cap with its outer edge against the sealing lip from below. An upward movement of the closure cap is required when transferring it from the open to the closed position.

However, with a right-hand thread, the cap would be lowered by a right-hand rotation. Therefore, the invention provides a left-hand thread through which the consumer can perform a closing movement of the closure cap intuitively associated with a right-hand rotation. The left-hand thread thereby creates an upward stroke. As with the opening of beverage bottles, the counterclockwise rotation movement leads to an opening. Due to the left-hand thread, the lid is lowered in the process.

Besides the invention provides a threaded stud or pin which is positioned in the center of a lower portion of the cap. The associated threaded receptacle is positioned in the center of a spoke-shaped support member of the housing.

The reverse arrangement is also possible, in which a threaded receptacle or a threaded nut is provided in an inner cavity of the cover and a threaded pin projecting upwards is held on the housing by a support element. In this embodiment, too, the cover is fixed between the support element on the inner housing member and the sealing outer edge of the housing outer part and is thus captive.

With respect to the two complementary parts of the housing provided according to a preferred embodiment of the invention, a snap-in connection may be provided. When the outer part of the housing is put over the inner part of the housing, including the upper sealing ring and the cap, the snap-in connection is closed during the manufacture of the drinking bottle closure and is subsequently no longer releasable.

According to a further advantageous embodiment, the joint between the inner and outer parts of the housing at the lower edge is alternatively or additionally joined together around the entire circumference by means of laser welding, so that a liquid-tight joint is produced there.

The sealing rings provided between the housing members can be formed as separate inserts made of silicone. Alternatively, they can be made of a thermoplastic elastomer which is molded onto one of the housing members to be produced by injection molding. In this case, molding onto the inner housing member is particularly suitable because both sealing rings can be formed on this part at the same time.

The construction of the housing from an inner part and a separate outer part also has the advantage that the parts can be produced in a contrasting color. For example, the inner part of the housing can be red, while the outer part of the housing is black, so that when the closure cap is lowered into the open position, a red stripe will become visible below the sealing edge, which visually signals the open position.

The threaded nut for receiving the threaded pin of the closure cap can be formed in a slip clutch element which is made of an elastomer, for example, and which has a non-round, in particular polygonal, outer contour. Harder thermoplastics such as polypropylene can also be used for this purpose, in which case sufficient elastic deformability is made possible by suitable shaping. The slipping clutch element is inserted into a support ring connected to the housing, which has a compatible non-circular, in particular polygonal, inner contour. If the user continues to rotate the lid with high force even though one of the end positions has already been reached, the slip clutch element deforms elastically and rotates relative to the support ring by at least a partial angle before elastic recovery of the slip clutch element and the form fit takes hold again.

The invention is explained in more detail below with reference to the embodiments shown in the figures. The figures show in detail:
- Fig. 1: a drinking bottle closure according to a first embodiment with an insulated bottle, in perspective view from the outside;
- Fig. 2: the drinking bottle cap in an exploded view;
- Fig. 3: the drinking bottle cap in closed position in a sectional view;
- Fig. 4: the drinking bottle cap in open position in a sectional view;
- Fig. 5: an enlarged detail from Fig. 4;
- Fig. 6: a perspective view of the drinking bottle cap from the underside;
- Fig. 7: a drinking bottle closure according to a second embodiment in sectional view and
- Fig. 8: an internal housing member of the drinking bottle closure according to Fig. 7 in a partially cut perspective view.

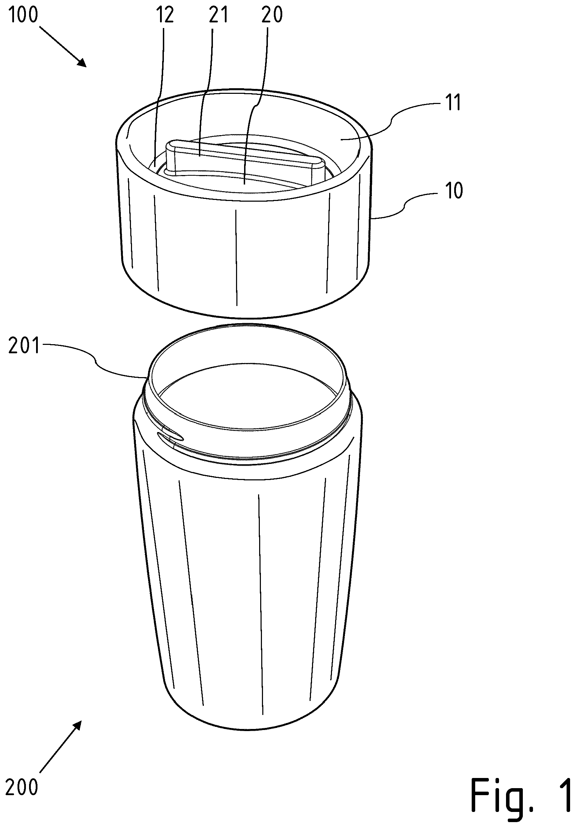

Figure 1 shows a drinking bottle closure 100 which can be placed on a bottleneck 201 of an insulated bottle 200. The drinking bottle closure 100 has a housing, of which the housing outer part 10 with a pouring rim 11 is visible here. A sealing edge 12 is formed on the inside lower edge of the pouring rim 11. Below the sealing edge 12, a closure cap 20 is arranged which can be rotated by means of a knob 21.

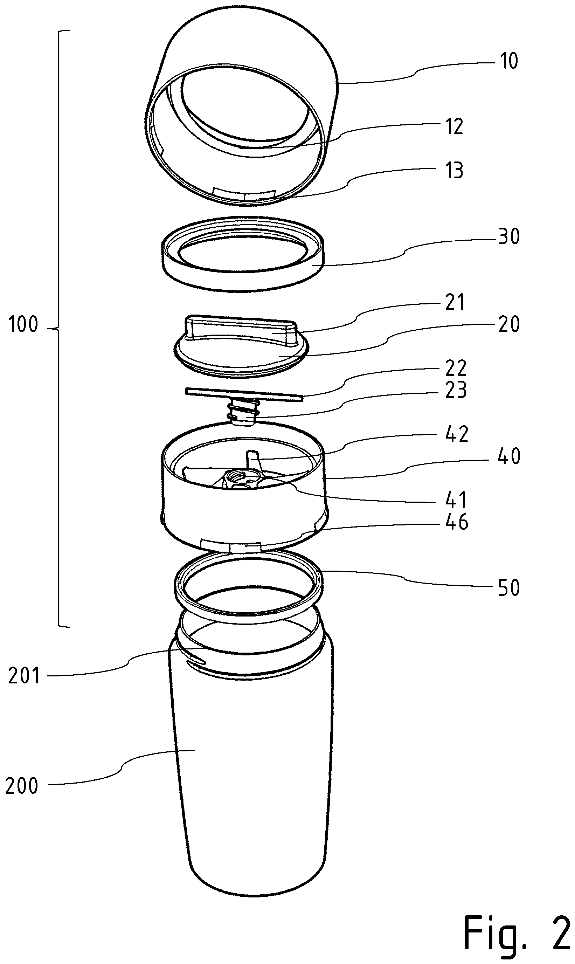

Figure 2 illustrates the drinking bottle closure 100 in an exploded view. It consists essentially of the following parts:
- the outer housing member 10,
- the closure cap 20,
- an inner housing member 40 and
- two sealing rings 30, 50.

The closure cap 20 is constructed in two parts. The knob 21 is part of an upper member. A separately manufactured lower member 22 is engageable therein and contains a threaded pin 23 with a movement thread in its center. The threaded pin 23 engages in a threaded recess 41 in the inner housing member 40. The threaded recess 41 is located in a support ring 44 at the center of a support element, which is integrally formed with the inner wall of the housing inner member 40 via spokes 42.

To assemble the drinking bottle cap 100, the lower cap member 22 is inserted into the upper member of the closure cap 20. The finished closure cap 20 is inserted with its threaded pin 23 into the threaded recess 41 of the inner housing member 40. The sealing ring 30 is placed on the upper edge of the inner housing member 40. Finally, the outer housing member 10 is slipped over it, with the sealing ring 30 enclosed between the inner housing member 40 and the outer housing member 10, as is the closure cap 20. All four components 10, 20, 30, 40, after the latching projections 13 of the outer housing member 10 have latched onto the latching receptacles 46 on the inner housing member 40, together form a unit which cannot be subsequently detached.

The further sealing ring 50 may be inserted into the inner housing portion 40 from below and seals the latter relative to the bottleneck 201 when the closure cap is in use in connection with an insulated bottle 200.

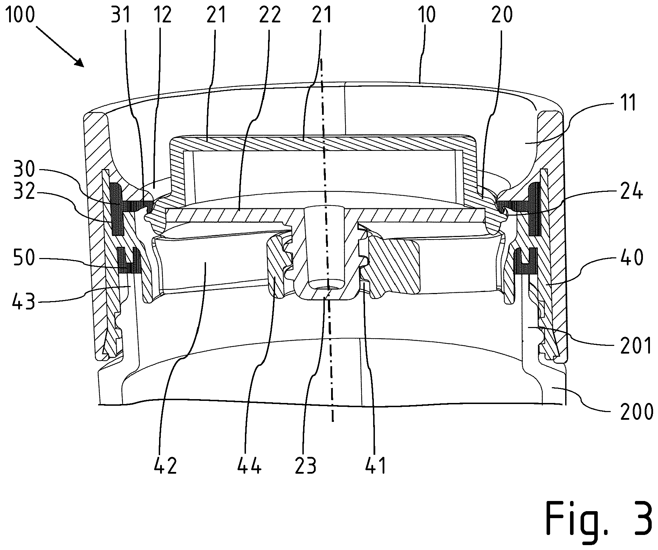

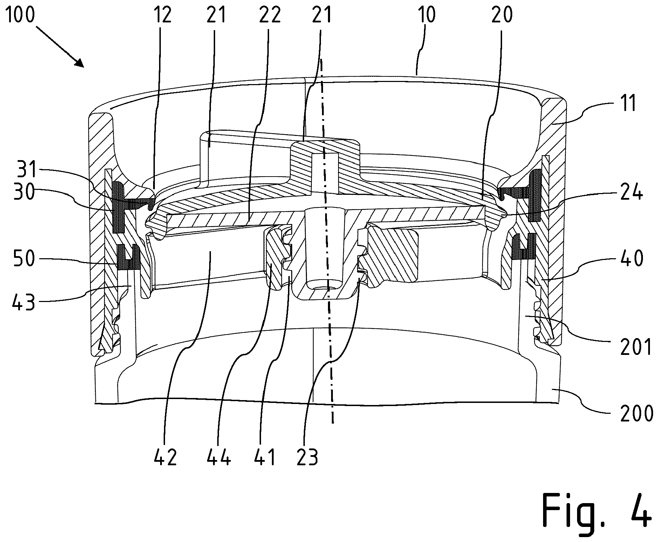

The function of the drinking bottle closure 100 according to the invention can be seen from Figures 3 and 4, each of which shows a section through the drinking bottle closure 100 being placed on the bottleneck 201 of the insulated bottle 200. In both illustrations the drinking bottle closure 100 is sealed to the bottleneck 201 via the sealing ring 50 which is inserted into a groove 43.

The upper sealing ring 30 is T-shaped in cross-section, so that it is well anchored with a wide base 32 in the two-part wall consisting of housing inner and outer members 10, 40. The radially inwardly projecting sealing lip 31 is supported from below on the sealing edge 12 of the pouring rim 11, which also projects radially inward.

It should also be emphasized that in this embodiment of a drinking bottle closure 100 the sealing ring 30 not only serves to abut the closure cap 20 for sealing the drinking bottle closure 100 in a liquid-tight manner during use, but that it simultaneously seals the parting line between the inner housing member 40 and the outer housing member 10 latched thereto. The integrated sealing ring 30 enables to easily manufacture two housing members 10, 40 that can be produced by injection molding.

The support element formed with a plurality of spokes 42 on the inner housing member 40 has the threaded recess 41 in its center, into which the threaded pin 23 of the closure cap 20 is inserted.

In order to bring the drinking bottle closure 100 from the closure position shown in Figure 3 into the open position, the closure cap 20 is rotated by means of the knob 21 relative to the base consisting of the inner and outer housing members 10, 40. An axial stroke of the cap 20 is effected via the threaded elements 23, 41 causing the closure cap 20 to move downwards such that its outer edge 24 lifts off the sealing lip 31 of the sealing ring 30 and a pouring opening is created.

The open position is shown in Figure 4. A slit-shaped opening between the closure cap 20 and the sealing lip 31 has been created around the entire circumference, through which the beverage contained inside the insulated bottle 200 can flow out into the area of the pouring rim 11.

It can be seen from the position of the knob 21 that, due to the large pitch of the movement thread on the threaded pin 23, only a small angle of rotation of the closure cap 20 of about 45° is required to bring it from the closed position shown in Figure 3 to the open position shown in Figure 4.

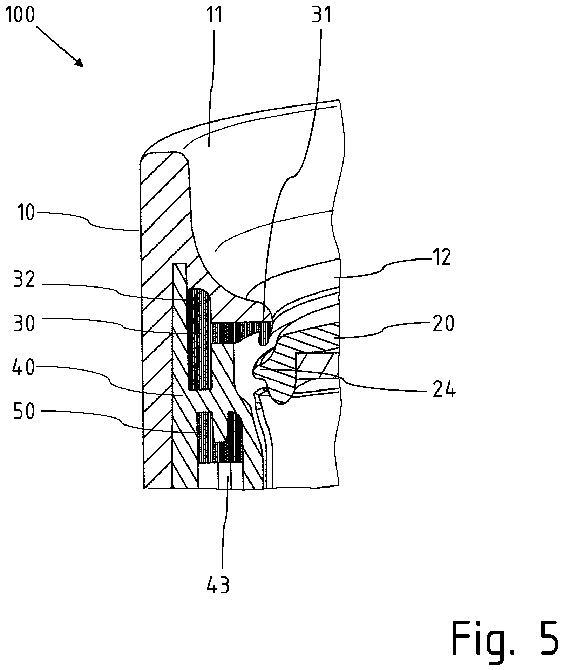

Figure 5 shows an enlarged sectional view of Figure 4 to illustrate in detail the design of the area in which the sealing is effected and the pouring of the beverage is made possible.

As explained above, the sealing ring 30 is positioned in the parting line between the inner housing member 40 and the outer housing member 10. The inner housing member 40 has a groove which is accessible from above before the housing members are joined, so that the lower part of the base 32 of the sealing ring 30 can be inserted therein.

The shaping of the outer tip of the sealing lip 31 and of the outer edge 24 of the closure cap 20 is optimized to create a tolerance range with respect to the force with which the closure cap 20 is twisted by the user relative to the housing:
- If only a small force is applied, the downward pointing tip of the sealing lip 31 has a spring effect, and even light contact with the outer edge 24 is sufficient for achieving a reliable seal.
- When internal pressure builds up in the bottle, the slight outward tilt of the tip causes it to be pressed against the tapered area on the outer edge 24 of the closure cap 20.
- Finally, if the sealing closure cap 20 is twisted with a high force relative to the housing by the user, the tip of the sealing lip 31 is deformed. It is pushed away radially outward and rests against the remaining profile area of the sealing ring. This increases the spring travel, and a greater force can be absorbed elastically via the sealing ring.

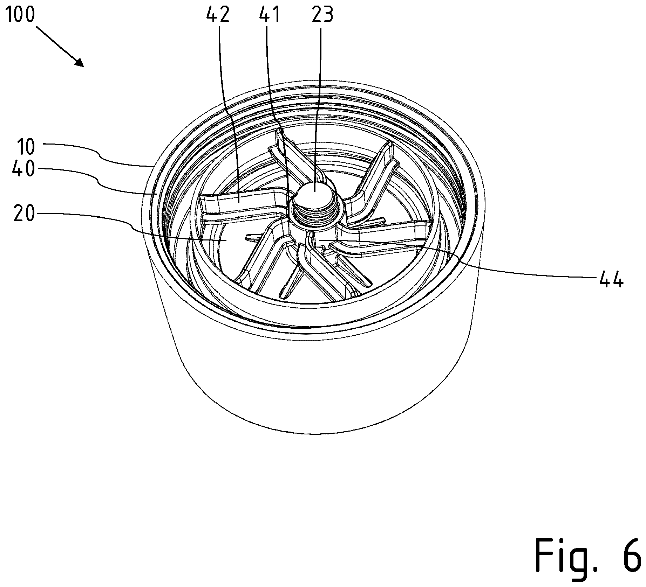

Figure 6 shows the drinking bottle closure 100 from the underside, in which in particular the shape of the spoke elements 42 is visible. The spoke elements 42 each extend inwardly from the annular outer wall of the inner housing member 40 to the center. Together they hold the support ring 44 with the threaded recess 41 in the center. The spoke elements 42 are not extending radially outwards but are curved which enables better elastic deformation, in particular in the event that the closure cover 20 is subjected to an excessive force at one of the end points of its possible movement path. Such a high force causing deformation will arise if the user does not stop the rotational movement of the closure cover 20 in time before the end position and continues to rotate with force.

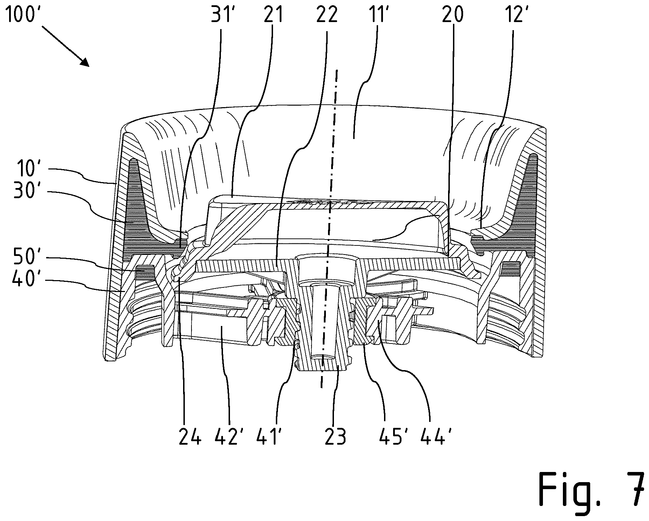

Figure 7 shows a sectional view of a second embodiment of a drinking bottle closure 100'. Compared to the first embodiment, the drinking bottle closure 100' has differences in the design of the housing members 10', 40' and in the threaded recess 41' in the center.

The housing consists of an outer housing member 10', an inner housing member 40' and two sealing elements 30', 50' which are molded-on and made of a thermoplastic elastomer. The lower sealing element 50' is used for sealing against a bottleneck of a drinking bottle onto which the drinking bottle cap can be placed.

The upper sealing element 30' fills a cavity between the rigidly formed inner housing member 40' and the likewise rigidly formed outer housing member 10'. The entire pouring rim 1 1' on the housing outer part 10' is otherwise thin-walled. The sealing element 30' not only seals with its sealing lip 31' against the outer edge 24 of the closure cover 20 in a liquid-tight manner, but at the same time it connects the inner housing member 40' to the housing outer member 10' in a material-fit manner, so that an additional snap-in connection or the like is not required.

To prevent damage to the drinking bottle cap 100' if the user applies excessive force when rotating the closure cap 20 to one of the end positions, a threaded recess 41' for receiving the threaded pin 23 of the closure cap 20 is not arranged directly in a support ring 44', but in a slipping clutch element 45'.

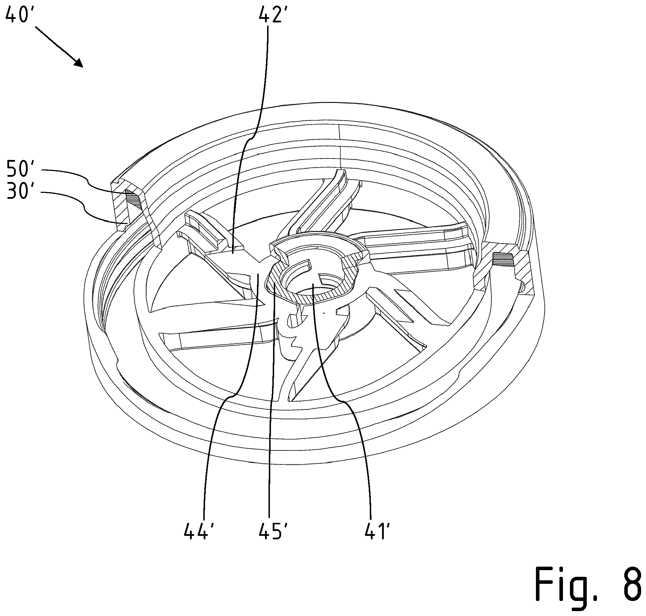

As shown in the partially cut view from below of the inner housing member 40' in Figure 8, the inner circumference of the support ring 44' is polygonal. The slipping clutch element 45' is made of an elastomeric material or it is elastically deformable due to its shape. It is annular in shape, being polygonal on the outer circumference and having the central, round threaded recess 41' on the inside.

A form fit is achieved via the polygonal shaping on the support ring 44' and the slipping clutch element 45', so that rotation of the slipping clutch element 45' relative to the inner housing member 41' is initially prevented when the closure cap is rotated .

However, if the user continues to rotate the closure cap 20 in one of the end positions with excessive force, the slipping clutch element 45' is elastically deformed and the positive connection to the support ring 44' is temporarily suspended. In this case, the closure cap 20 is thus further rotated at least over a rotation angle corresponding to the polygonal pitch on the slipping clutch element 45'. This prevents from damage to the movement threads on the threaded pin 23 of the closure cap and the threaded recess 41' in the support ring 44'. As soon as the force exerted by the user decreases, an elastic recovery occurs in the slipping clutch element 45' and the positive connection to the support ring 44' is restored.

### list of reference signs:

- 100, 100': drinking bottle closure

- 10, 10': outer housing member
- 11, 11': a pouring rim
- 12, 12': sealing edge
- 13: latching projections

- 20: closure cap
- 21: knob
- 22: lower cap member
- 23: threaded pin
- 24: outer edge

- 30, 30': sealing ring
- 31, 31': sealing lip
- 32: base

- 40, 40': inner housing member
- 41, 41': threaded recess
- 42, 42': spoke element
- 43: groove
- 44, 44': support ring
- 45, 45': slip coupling element
- 46: latching receptacles

- 50, 50': sealing ring

- 200: insulated bottle
- 201: bottleneck

## Claims

1. Drinking bottle closure (100; 100') with a rotatable closure cap (20) for an insulated bottle (200) or for an insulated mug, at least comprising:
- a housing with a pouring rim (11; 11') surrounding a pouring opening delimited by a sealing edge (12; 12');
- the closure cap (20), which is rotatably mounted above a support element connected to the housing;
- a sealing element (30; 30') for sealing the closure cap (20) on the sealing edge (12; 12') of the housing,
wherein:
- at least one sealing lip (31, 31') of the sealing element (30; 30') is arranged below the sealing edge (12; 12'),
- an outer edge (24) of the closure cap (20) is arranged below the sealing lip (31, 31') and wherein:
- the closure cap (20) is secured to the support element (44; 44') by a threaded joint and
- the closure cap (20) is coupled to the housing such that clockwise rotation of the closure cap (20) causes a vertical stroke from below toward the sealing lip (31; 31').

2. A drinking bottle closure according to claim 1, **characterized in that**
- a centrally arranged threaded pin (23) is provided on an underside of the closure cap (20) and
- a central threaded recess (41; 41') is formed on the support element (44; 44').

3. A drinking bottle closure according to claim 1, **characterized in that** a central threaded recess is provided on an underside of the closure cap and a threaded pin is provided on the support member.

4. Drinking bottle closure (100') according to any of the preceding claims, **characterized in that** the housing is formed in multiple members with at least one housing inner member (40; 40') and one housing outer member (10; 10'), wherein the sealing element (30') with the sealing lip (31') for sealing the closure cap (20) is arranged between the housing inner member (40; 40') and the housing outer member (10; 10').

5. A drinking bottle closure (100') according to claim 4, **characterized in that** the sealing ring (30) is formed as an insert having a L-shaped or T-shaped cross-section with a base (32) and the sealing lip (31) is extending perpendicular thereto.

6. A drinking bottle closure (100') according to any one of the preceding claims, **characterized in that** a support ring (44') is connected to the inner body portion (40') via a plurality of spoke elements (42') extending from the inner edge of the inner body portion (40') tangentially to the outer periphery of the central support element for receiving the thread.

7. A drinking bottle closure (100') according to any one of the preceding claims, **characterized in that**:
- a support ring (44') is provided which is connected to a housing member (40') and has a non-circular inner contour, and **in that**
- an elastically deformable, annular slip coupling element (45') with a non-circular outer contour is inserted into the support ring (44'), wherein a threaded recess (41') or a threaded pin is formed on the slip coupling element (45').

8. The drinking bottle closure (100') of claim 7, **characterized in that** the outer contour of the slip coupling element (45') and the inner contour of the support ring (44') are polygonal.

## Patentansprüche

1. Trinkflaschenverschluss (100; 100') mit einer drehbaren Verschlusskappe (20) für eine Isolierflasche (200) oder für einen Isolierbecher, zumindest umfassend:
- ein Gehäuse mit einem Ausgussrand (11; 11'), der eine von einer Abdichtkante (12; 12') begrenzte Ausgussöffnung umgibt;
- die Verschlusskappe (20), die drehbar über einem mit dem Gehäuse verbundenen Trägerelement montiert ist;
- ein Abdichtelement (30; 30') zum Abdichten der Verschlusskappe (20) an der Abdichtkante (12; 12') des Gehäuses,
wobei:
- zumindest eine Abdichtlippe (31, 31') des Abdichtelements (30; 30') unterhalb der Abdichtkante (12; 12') angeordnet ist,
- eine Außenkante (24) der Verschlusskappe (20) unterhalb der Abdichtlippe (31, 31') angeordnet ist,
und wobei:
- die Verschlusskappe (20) durch eine Schraubverbindung an dem Stützelement (44; 44') befestigt ist, und
- die Verschlusskappe (20) mit dem Gehäuse gekoppelt ist, sodass eine Drehung der Verschlusskappe (20) im Uhrzeigersinn einen vertikalen Hub von unten in Richtung der Abdichtlippe (31; 31') veranlasst.

2. Trinkflaschenverschluss nach Anspruch 1, **dadurch gekennzeichnet, dass**
- an einer Unterseite der Verschlusskappe (20) ein mittig angeordneter Gewindestift (23) bereitgestellt ist, und
- an dem Stützelement (44; 44') eine mittige Gewindeausnehmung (41; 41') gebildet ist.

3. Trinkflaschenverschluss nach Anspruch 1, **dadurch gekennzeichnet, dass** an einer Unterseite der Verschlusskappe eine mittige Gewindeausnehmung bereitgestellt ist und an dem Trägerelement ein Gewindestift bereitgestellt ist.

4. Trinkflaschenverschluss (100') nach einem der vorstehenden Ansprüche, **dadurch gekennzeichnet, dass** das Gehäuse aus mehreren Gliedern mit zumindest einem Gehäuseinnenglied (40; 40') und einem Gehäuseaußenglied (10; 10') gebildet ist, wobei zwischen dem Gehäuseinnenglied (40; 40') und dem Gehäuseaußenglied (10; 10') das Abdichtelement (30') mit der Abdichtlippe (31') zum Abdichten der Verschlusskappe (20) angeordnet ist.

5. Trinkflaschenverschluss (100') nach Anspruch 4, **dadurch gekennzeichnet, dass** der Abdichtring (30) als Einsatz, der einen L-förmigen oder T-förmigen Querschnitt aufweist, mit einer Basis (32) gebildet ist und sich die Abdichtlippe (31) orthogonal dazu erstreckt.

6. Trinkflaschenverschluss (100') nach einem der vorstehenden Ansprüche, **dadurch gekennzeichnet, dass** ein Stützring (44') über eine Vielzahl von Speichenelementen (42') mit dem inneren Körperabschnitt (40') verbunden ist, die sich von der Innenkante des inneren Körperabschnitts (40') tangential zu dem Außenumfang des zentralen Trägerelements erstrecken, um das Gewinde aufzunehmen.

7. Trinkflaschenverschluss (100) nach einem der vorstehenden Ansprüche, **dadurch gekennzeichnet, dass**:
- ein mit einem Gehäuseglied (40') verbundener Stützring (44') bereitgestellt ist, der eine nicht kreisförmige Innenkontur aufweist, und dadurch, dass
- in den Stützring (44') ein elastisch verformbares, ringförmiges Rutschkupplungselement (45') mit einer nicht kreisförmigen Außenkontur eingesetzt ist, wobei an dem Rutschkupplungselement (45') eine Gewindeausnehmung (4T) oder ein Gewindestift gebildet ist.

8. Trinkflaschenverschluss (100') nach Anspruch 7, **dadurch gekennzeichnet, dass** die Außenkontur des Rutschkupplungselements (45') und die Innenkontur des Stützrings (44') polygonal sind.

## Revendications

1. Fermeture de bouteille à boire (100 ; 100') avec un bouchon de fermeture rotatif (20) pour une bouteille isotherme (200) ou pour une tasse isotherme, comprenant au moins :
- un boîtier avec un rebord verseur (11; 11') entourant une ouverture de versement délimitée par un bord d'étanchéité (12 ; 12') ;
- le bouchon de fermeture (20), qui est monté rotatif au-dessus d'un élément de support relié au boîtier ;
- un élément d'étanchéité (30; 30') pour sceller le bouchon de fermeture (20) sur le bord d'étanchéité (12 ; 12') du boîtier,
dans laquelle :
- au moins une lèvre d'étanchéité (31, 31') de l'élément d'étanchéité (30; 30') est agencée sous le bord d'étanchéité (12 ; 12'),
- un bord externe (24) du bouchon de fermeture (20) est agencé sous la lèvre d'étanchéité (31, 31')
et dans laquelle :
- le bouchon de fermeture (20) est fixé à l'élément de support (44 ; 44') par un joint fileté et
- le bouchon de fermeture (20) est couplé au boîtier de telle sorte qu'une rotation dans le sens des aiguilles d'une montre du bouchon de fermeture (20) provoque une course verticale depuis le bas vers la lèvre d'étanchéité (31 ; 31').

2. Fermeture de bouteille à boire selon la revendication 1, **caractérisée en ce que**
- une tige filetée agencée centralement (23) est disposée sur une face inférieure du bouchon de fermeture (20) et
- un évidement fileté central (41 ; 41') est formé sur l'élément de support (44 ; 44').

3. Fermeture de bouteille à boire selon la revendication 1, **caractérisée en ce qu'**un évidement fileté central est disposé sur une face inférieure du bouchon de fermeture et une tige filetée est disposée sur l'élément de support.

4. Fermeture de bouteille à boire (100') selon l'une quelconque des revendications précédentes, **caractérisée en ce que** le boîtier est formé de plusieurs éléments avec au moins un élément interne de boîtier (40; 40') et un élément externe de boîtier (10 ; 10'), dans laquelle l'élément d'étanchéité (30') avec la lèvre d'étanchéité (31') pour sceller le bouchon de fermeture (20) est agencé entre l'élément interne de boîtier (40; 40') et l'élément externe de boîtier (10 ; 10').

5. Fermeture de bouteille à boire (100') selon la revendication 4, **caractérisée en ce que** la bague d'étanchéité (30) est formée comme un insert présentant une section transversale en forme de L ou de T avec une base (32) et la lèvre d'étanchéité (31) s'étend perpendiculairement à celle-ci.

6. Fermeture de bouteille à boire (100') selon l'une quelconque des revendications précédentes, **caractérisée en ce qu'**une bague de support (44') est connectée à la partie de corps interne (40') par le biais d'une pluralité d'éléments de rayon (42') s'étendant depuis le bord interne de la partie de corps interne (40') tangentiellement à la périphérie externe de l'élément de support central pour recevoir le filetage.

7. Fermeture de bouteille à boire (100) selon l'une quelconque des revendications précédentes, **caractérisée en ce que** :
- une bague de support (44') est disposée, laquelle est connectée à un élément de boîtier (40') et présente un contour interne non circulaire, et **en ce que**
- un élément de couplage à glissement annulaire élastiquement déformable (45') présentant un contour externe non circulaire est inséré dans la bague de support (44'), dans laquelle un évidement fileté (4T) ou une tige filetée est formé sur l'élément de couplage à glissement (45').

8. Fermeture de bouteille à boire (100') selon la revendication 7, **caractérisée en ce que** le contour externe de l'élément de couplage à glissement (45') et le contour interne de la bague de support (44') sont polygonaux.
